# EUROPEAN PATENT SPECIFICATION

(11) **EP 0 561 043 B1**
(45) Date of publication and mention of the grant of the patent: **14.08.1996**
(21) Application number: 92118648.2
(22) Date of filing: 30.10.1992
(51) Int. Cl.: H04N 3/233

(54) **Top/bottom pincushion correction circuit**
Kissenverzeichnungskorrekturschaltung für den oberen/unteren Teil
Circuit de correction de coussin pour les parties basses et hautes

(30) Priority: 17.03.1992 JP 59946/92
(43) Date of publication of application: 22.09.1993
(73) Proprietor: MATSUSHITA ELECTRIC INDUSTRIAL CO., LTD., Kadoma-shi, Osaka-fu, 571 (JP)
(72) Inventor: Ando, Hiroshi, Ibaraki City, 567 (JP)
(74) Representative: Herrmann-Trentepohl, Werner, Dipl.-Ing.

(56) References cited:
- US-A- 4 395 662
- US-A- 4 692 804
- US-A- 4 795 946
- US-A- 4 927 219

## Description

### FIELD OF THE INVENTION AND RELATED ART STATEMENT

### 1. FIELD OF THE INVENTION

The present invention generally relates to an improvement in the deflection circuit for the cathode ray tube (CRT) display device of a television receiver (TV) or a video monitor for computer system. More particularly, it is concerned with an improved top/bottom pincushion correction circuit in the horizontal deflection distortion of such device.

### 2. DESCRIPTION OF THE PRIOR ART

The corner pincushion correction of display device becomes more and more important as larger deflection angle and higher flatness of the faceplate are widely used in modern CRTs for a wide angle television receivers and video display monitors of the computers.

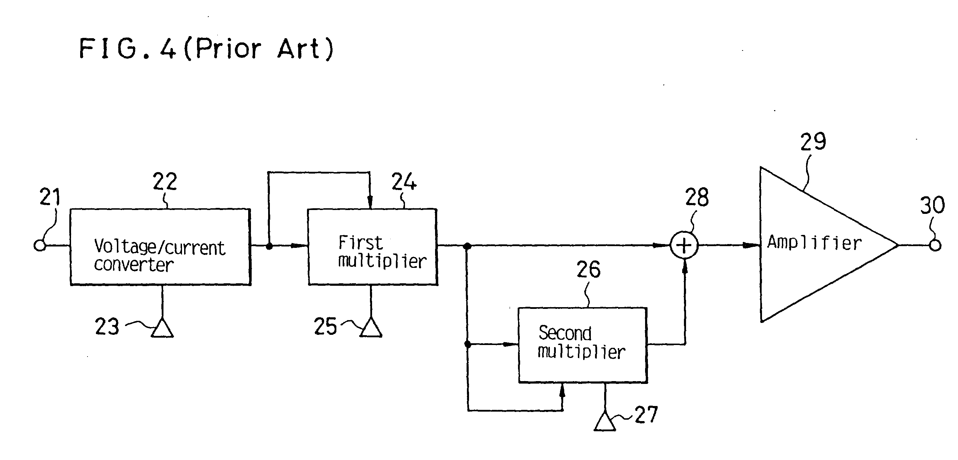

FIG.4 is a block diagram showing an example of the prior art horizontal pincushion distortion correction circuit. In this circuit, a sawtooth wave signal 21 having a vertical period (hereinafter, referred to as "vertical sawtooth wave"), which is produced by charge/discharge of a capacitor of an outside circuit and timed by a vertical synchronization signal of the video image signal, is inputted to a voltage/current converter 22. The voltage/current converter 22 produce a sawtooth current signal by utilizing a control signal given thereto through its input terminal 23. A distribution ratio of the current signal produced by said voltage/current converter 22 is adjusted by a control data signal, supplied from a microprocessor (not shown) or the like in a related outside unit of the apparatus, through the input terminal 23. Thereby, phase of a pincushion distortion correction quadratic curve wave (hereinafter, to be referred to as "parabolic wave") is changed.

A first multiplier circuit 24 make square of or multiplies by itself said vertical sawtooth wave signal from said voltage/current converter 22; and then it generates a parabolic wave signal for correcting the pincushion distortion in the raster display. And the first multiplier circuit 24 receives a data signal for adjusting the amplitude of said parabolic wave signal through a first control voltage input terminal 25.

A second multiplier circuit 26 make square of or multiplies by itself said parabolic wave signal from said first multiplier circuit 24 and generates quartic signal or a 4th degree curve signal (created by squared parabola) for correcting the horizontal pin cushion distortions at top part and bottom part of the left end right parts of the raster. The second multiplier circuit 26 receives a data signal for adjusting the amplitude of said quartic wave signal through a second control voltage input terminal 27.

An adder circuit 28 connected so as to receive output signals of said first multiplier 24 and a second multiplier 26 performs an addition of said parabolic wave signal from said first multiplier circuit 24 for pincushion-distortion correction, and said quartic curve wave signal from said second multiplier 26 for correcting the horizontal distortions at top and bottom of the left/right parts of the raster. By the addition, the adder circuit 28 generates an output representing the sum of the addition.

An amplifier circuit 29 amplifies output supplied by said adder circuit 28 which is the sum of said parabolic wave signal for correcting the pincushion distortion and of said quartic curve wave signal for correcting the corner distortions in the raster, and produces a corresponding output signal 30.

The control data signal for adjusting the distribution ratio of the current signal output of said voltage/current converter 22 is supplied from the microprocessor or the like outside means through the terminal 23. The control data signal, for adjusting the amplitudes of said parabolic wave signal is supplied to the multiplier 24 from the outside means through the terminal 25. The control data signal for adjusting said quartic curve wave signal is supplied to the latter from the outside means through said control voltage input terminal 27.

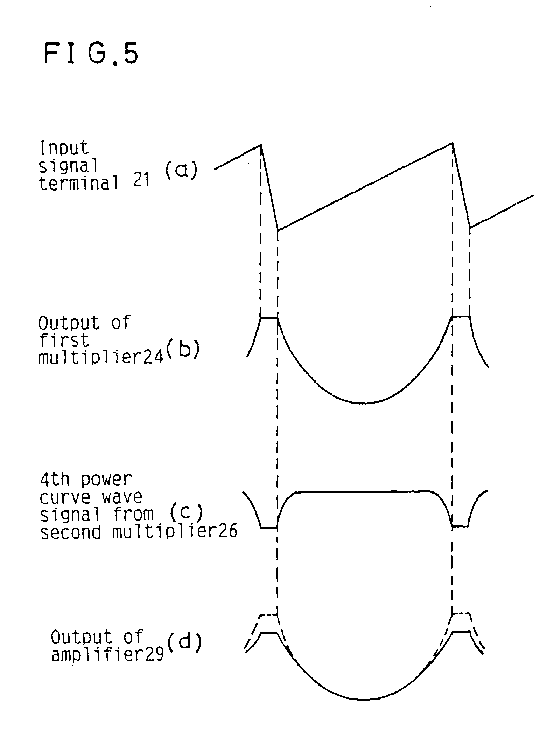

FIG.5 is waveform charts showing electric waveforms at respective points in the above-configured conventional circuit. In FIG.5, (a) represents the vertical sawtooth wave signal at the input terminal 21, (b) represents the parabolic wave signal at the output terminal of the first multiplier 24 for correcting the pincushion distortion, (c) represents the quartic curve wave signal at the output terminal of the second multiplier circuit 26, and (d) represents the sum of the addition of said parabolic wave signal (b) and said quartic curve wave signal (c). The sum signal as composed in one set of the circuits is used for correcting the horizontal corner distortion of top part of the raster and the bottom part of the raster.

According to the above-mentioned conventional pincushion correction circuit, both the top parts and bottom parts of the horizontal pincushion distortion of the raster are intended to be corrected by using the common correction signal obtained by the above-mentioned single set of circuit. Therefore, makings of individual distortion corrections for the top part and the bottom part have not been possible.

Throughout this specification and claims, the term "top corners" is used to denote the right/ left corners in the top part of the raster display on the cathode ray tube, and the term "bottom corners" is used to denote the east/west corners in the bottom part of the same. The east/west corners are corrected of the horizontal pincushion distortions by applying the composite curve signal of FIG.5(d) to known diode modulator circuit. And the right and left end parts of the curve of FIG.5(d) at the vicinities which are designated by two vertical dotted lines correspond to the right and left parts of the raster.

If the raster display at the top corners are distorted always in the exact same degree as that at the bottom corners, there is no problem even using the same correction signal of FIG.5(d) for both the top corners and the bottom corners. It however is said that the distortion in the top corners is by no means the same as that in the bottom corners possibly due to the configuration asymmetry in the actually employed cathode ray tubes and in the deflection yoke.

Therefore, the prior art pincushion correction circuit has a problem that even if the distortion in the top corners would be corrected sufficiently, that in the bottom corners might be insufficient or over-corrected. Or in some case when the distortion in the bottom corner would be corrected accurately, that in the top corner might be corrected excessively.

US-A-4 395 662 discloses a corner raster Distortion correction circuit having the features of the preamble of claim 1. This correction circuit relates to correction of distortion in image projected on a screen of the projection TV. The prior art circuit correcting the parabola waveform is based on a generally known Keystone method. It relates to:
(i) trapezoidal distortion correction caused by angular arrangement of the CRTs for the screen of the projection TV;
(ii) top and bottom pincushion distortion correction; and
(iii) right and left pincushion distortion correction in case perfect correction is impossible only by an ordinary distortion correction circuit as a result of magnified distortion in the CRT by the correction of the image optically projected on the screen.
Correction circuits belonging to the above-mentioned correction (iii) are shown in Fig. 28 and Fig. 29. By a pair of pincushion correction circuits, correction signals are made independently from each other based on saw-tooth shaped wave within respective periods of the first half and the second half of a vertical sweep interval, thereby producing a corrected parabola waveform.

### OBJECT AND SUMMARY OF THE INVENTION

It is an object of the present invention to overcome the above-mentioned disadvantage, and to perform a more perfect correction of the whole distortion in the raster display, by providing an independent correction of distortions of the top corner and bottom corner.

Another object of the present invention is to provide a cathode ray tube (CRT) display device for a television receiver or a video monitor of a computer that have a minimum pincushion distortion in the raster display on the CRT.

According to the present invention, there is provided an top/bottom individually adjustable pincushion correction circuit as defined in claim 1.

As above-mentioned, the present invention can realize the correction on the deflection distortions of the raster display more accurately by performing the correction on the top corners of the raster display on the cathode ray tube and that on the bottom corners independently from each other.

By providing a pair of independent control systems each having a pincushion distortion correcting function for the top corners or the bottom corners of the raster display, a better correction of pincushion distortion correction is possible, and its practical advantage is great.

According to another aspect of the present invention, there is provided a cathode ray tube (CRT) display device for a television receiver or a video monitor for a computer output which comprises the corner pincushion correction circuit as claimed in claim 1.

While the novel features of the present invention are set forth particularly in the appended claims, the invention, both as to organization and contents, will be better understood and appreciated, along with other objects and features thereof, from the following detailed description taken in conjunction with the drawings.

### BRIEF DESCRIPTION OF THE DRAWINGS

FIG.1 is a block diagram showing an embodiment of the pincushion correction circuit built in accordance with the present invention.

FIG.2 is a circuit diagram showing an example of the concrete circuitry corresponding to the part of the block diagram of FIG.1 encircled by a broken line, wherein (a) represents a bottom corner distortion correction circuit and (b) represents a top corner distortion correction circuit.

FIG.3 is a set of waveform charts showing a concept of the independent generation of the top/bottom corner distortion correction signals in an embodiment shown in FIG.1.

FIG.4 is a block diagram of the prior art pincushion correction circuit.

FIG.5 is a set of waveform charts showing a concept of generation of the corner distortion correction signals in the prior art pincushion correction circuit.

### DESCRIPTION OF THE PREFERRED EMBODIMENT

### [Configuration of the Example]

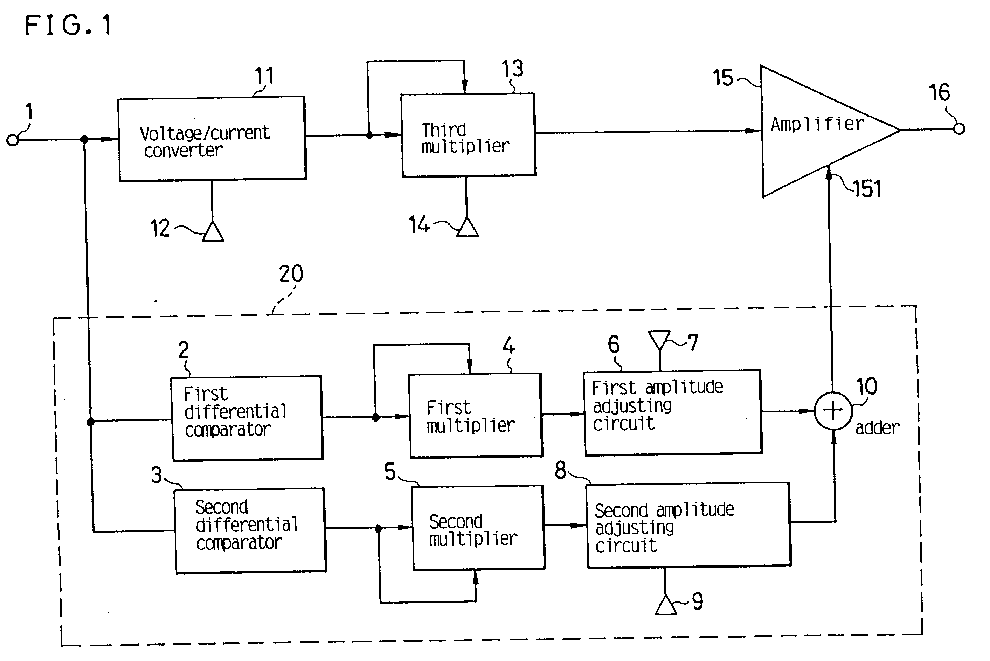

FIG.1 is a block diagram showing a preferred embodiment of the pincushion distortion correction circuit, wherein a block 20 surrounded by a broken line is a newly entered part for this corner pincushion correction circuit. In FIG.1, an input vertical sawtooth wave signal 1 is produced by charge/discharge of a known (not shown) capacitor-type time determining circuit which is synchronized to a vertical synchronization signal contained in the video image signal. The input vertical sawtooth wave signal is supplied to the input terminals of a voltage/current converter 11, a first differential comparator 2 and a second differential comparator 3 in common. The first differential comparator 2 samples the upper portion of the vertical sawtooth wave signal which corresponds to the bottom corners of raster when said sawtooth wave signal is used for the vertical deflection and produces a sampled signal representing the bottom corners of raster. The second differential comparator 3 samples the lower portion of the vertical sawtooth wave signal which corresponds to the top corners of raster when said signal is used in correction for the vertical deflection and produces a sampled signal representing the top corners of raster.

A fist multiplier 4 multiplies the sampled signal produced by said first differential comparator 2 by itself (i.e. squares), and outputs a first quadratic curve or parabolic wave signal. And a second multiplier 5 multiplies the sampled signal produced by said second differential comparator 3 by itself (i.e. squares), and outputs a second parabolic wave signal.

A first amplitude adjusting circuit 6 has a control voltage signal input terminal 7 and adjusts the amplitude of the first parabolic wave signal supplied from said first multiplier 4. A second amplitude adjusting circuit 8 has a control voltage signal input terminal 9 and adjusts the amplitude of the second parabolic wave signal supplied from said second multiplier 5.

An adder circuit 10 performs an addition of the bottom corner correction wave signal supplied by said first amplitude adjusting circuit 6 and the top corner correction wave signal supplied by said second amplitude adjusting circuit 8, and issues a composite corner-distortion-correction wave signal.

The voltage/current converter 11 has a control voltage signal input terminal 12 and converts said vertical sawtooth wave voltage signal into a corresponding current signal. A control data signal is applied to said input terminal 12 for varying the distribution ratio to be outputted from said converter 11, thereby to change phase in a pincushion-distortion-correction parabolic-wave signal is supplied from a known microprocessor or the like in the outside unit.

A third multiplier 13 has a control voltage signal input terminal 14 and multiplies the vertical sawtooth current signal by itself (i.e. squares) and thus produces the pincushion-distortion-correction parabolic-wave signal. A data signal for adjusting the amplitude of the parabolic-wave signal to be produced in said multiplier circuit 13 is supplied to the control voltage signal input terminal 14 from the microprocessor or the like of outside unit.

An amplifier circuit 15 receives the pincushion-distortion-correction parabolic wave signal produced by said third multiplier circuit 13 and the corner-distortion-correction wave signal issued from the adder circuit 10, and produces a pincushion-distortion-correction parabolic-wave signal modified by the corner-distortion correction signal. Respective control voltage signal input terminals 7, 9, 12 and 14 are supplied with the data signals from the microprocessor or the like outside unit.

### [Operation of the Example]

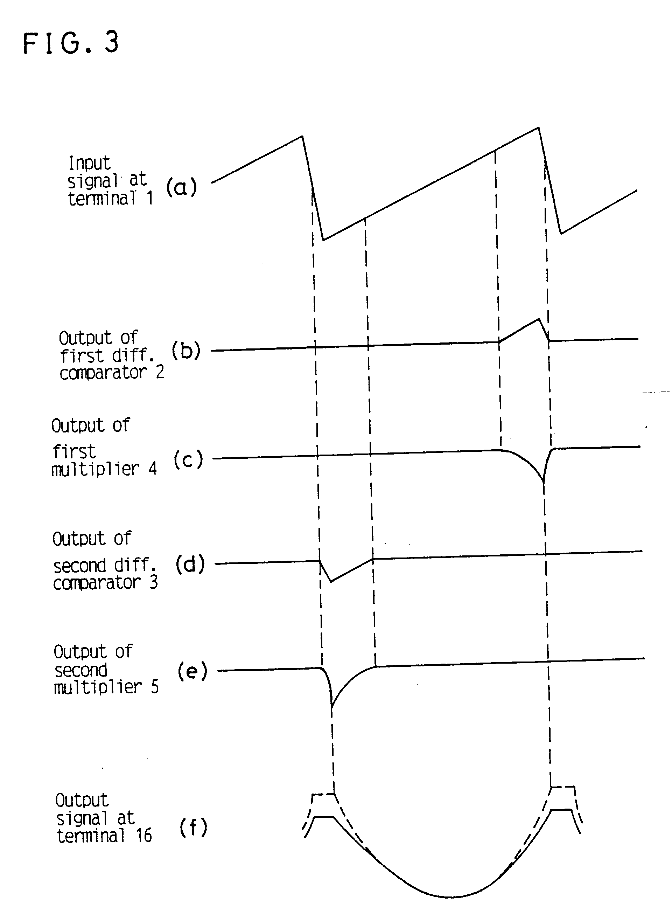

In the following paragraphs, the operation of the embodiment thus configured as shown in FIG.1 will be described by referring to FIG.3.

When a vertical sawtooth signal 1 having a waveform shown in FIG.3 (a) and the cycle of the vertical scanning frequency is inputted to the circuitry as shown in FIG.1, upper parts of the vertical sawtooth signal corresponding to the bottom corners of the raster on display is sampled by the first differential comparator circuit 2 and issued therefrom as shown in FIG.3 (b). The sampled signal is then multiplied by itself (i.e. squared) in the first multiplier circuit 4, whereby a sharp-peaked signal as shown in FIG.3 (c) is produced. The amplitude of the sharp-peaked signal is adjusted by the first amplitude adjusting circuit 6 and then supplied through the adder circuit 10 to the amplifier circuit 15.

Similarly, lower parts of the vertical sawtooth signal corresponding to the top corners of the raster on display is sampled by the second differential comparator circuit 3 and issued therefrom as shown in FIG.3 (d). The sampled signal is then multiplied by itself (i.e. squared) in the second multiplier circuit 5, whereby a sharp-peaked signal as shown in FIG.3 (e) is produced. The amplitude of the sharp-peaked signal is adjusted by the second amplitude adjusting circuit 8 and then supplied through the adder circuit 10 to the amplifier circuit 15. As a result, both end parts, corresponding to the top and the bottom parts of raster, of the parabolic wave signal produced by the third multiplier 13 is raised up; and hence a correction signal having a waveform shown by dotted line in FIG.3 (f) is obtained at the output end 16 of the amplifier 15.

Hithertofore in the prior art, the quadratic curve (parabolic) wave signal obtained by squaring the pincushion-distortion-correction parabolic-wave signal has been employed for the corner distortion correction wave signal. By such conventional means, however, when the correction in the top corners of the raster display and the bottom corners of the raster display have asymmetrical distortion, the distortion correction can not be made indenpendently from the top corners and the bottom corners each other.

In the present invention on the contrary, by providing the paired unit circuits encircled by the broken line in FIG.1 and by processing the signal in the above-mentioned manner, it is now possible to perform the correction in the top corners independently from that in the bottom corners. Thus, a better and easier pincushion correction adjustment can be made.

For this purpose, the distribution ratio in the signal to be outputted from said converter 11, and the amplitudes of the sharp-peaked signals supplied by said first and second multiplier circuits 4 and 5 are individually adjusted by the control signals to their input terminals 7 and 9, respectively, and the resultant signal is made to have the intended waveform.

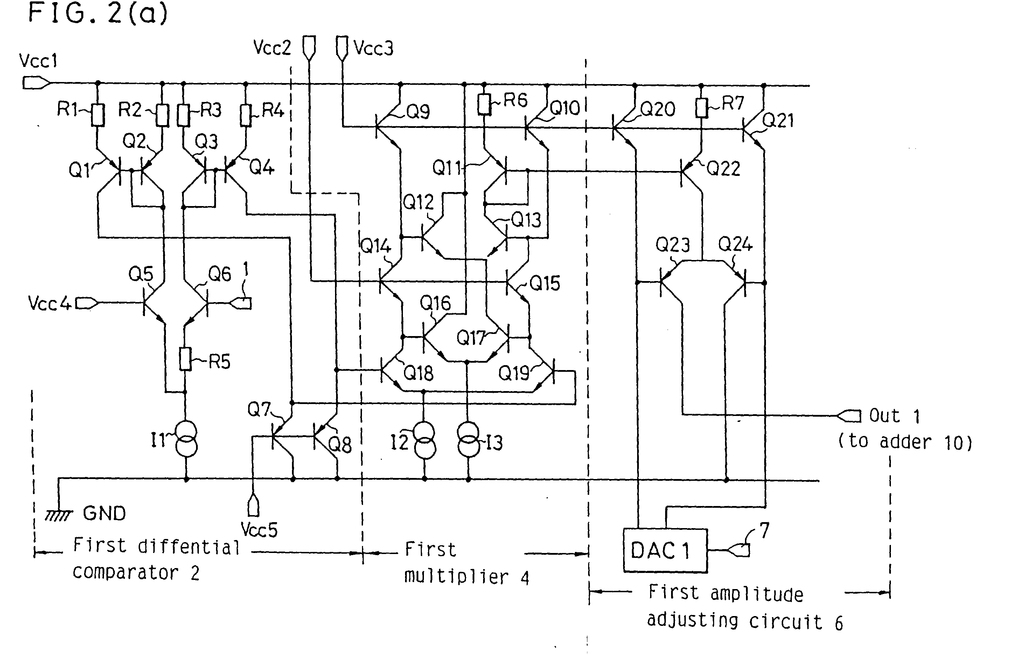

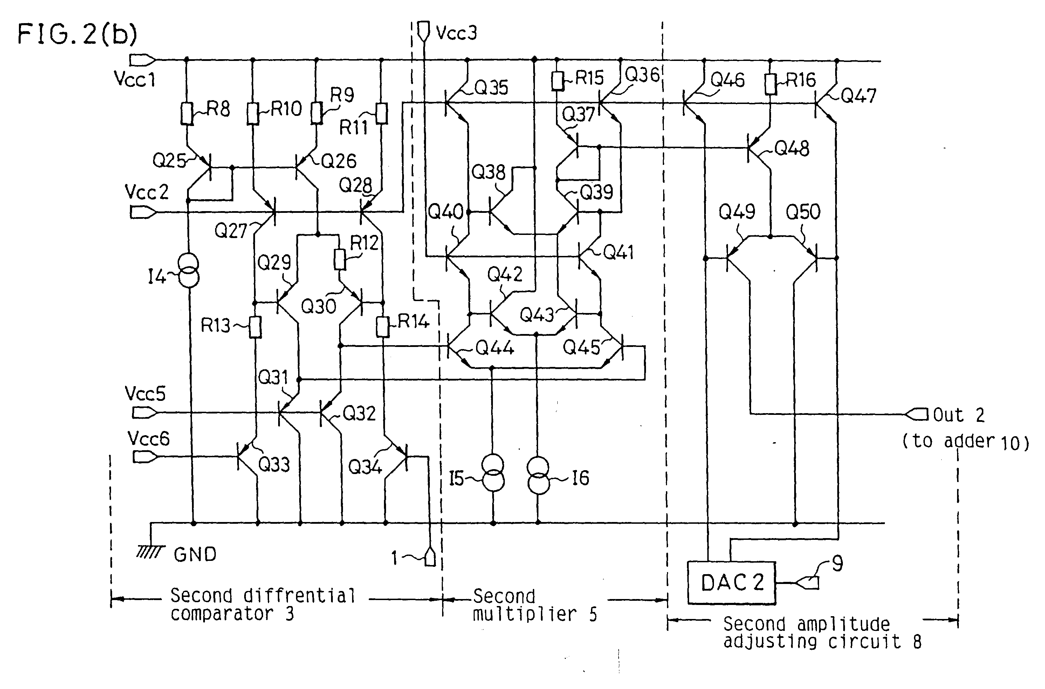

FIGs.2 (a) and 2 (b) show examples of the concrete circuit diagrams corresponding to the upper half unit circuits (2+4+6) and the lower half unit (3+5+8) in the broken-line encircled block 20 shown in FIG.1.

FIG.2 (a) shows a circuit for generating bottom-corner-distortion correcting wave, wherein the vertical sawtooth wave signal of a constant amplitude is applied to the input terminal 1 connected to the base of the transistor Q6. And such portion of the applied sawtooth wave signal as is higher than a reference voltage Vcc 4 applied to the base of the transistor Q5 is sampled by the first differential comparator 2. The sampled signal is multiplied by itself (i.e. squared) in the first multiplier 4 consisting essentially of the transistors Q12, Q13, Q14, Q15, Q16, Q17, Q18 and Q19. The amplitude of the squared output signal is then adjusted in the first amplitude adjusting circuit 6, which is a differential circuit essentially comprised of the transistors Q23 and Q24, by varying the control current supplied from DAC1. The waveform of the adjusted signal is shown in FIG.3 (c).

FIG.2 (b) shows a circuit for generating top-corner-distortion correcting wave, wherein the vertical sawtooth wave signal of a constant amplitude is applied to the input terminal 1 connected to the base of the transistor Q34. And such portion of the applied sawtooth wave signal as is lower than a reference voltage Vcc 6 applied to the base of the transistor Q33 is sampled by the second differential comparator 2. The sampled signal is multiplied by itself (i.e. squared) in the second multiplier 4 consisting essentially of the transistors Q38, Q39, Q40, Q41, Q42, Q43, Q44 and Q45. The amplitude of the squared output signal is then adjusted in the second amplitude adjusting circuit 8, which is a differential circuit essentially comprised of the transistors Q49 and Q50, by varying the control current supplied from DAC2. The waveform of the adjusted signal is shown in FIG.3 (e).

## Claims

1. A corner pincushion correction apparatus for correcting a pincushion distortion in top corners and bottom corners of a raster display comprising:
a pair of unit circuits including a first unit and a second unit:
said first unit comprising:
a first differential comparator circuit (2) which is supplied with a saw-tooth wave voltage signal having a vertical scanning frequency for sampling an upper portion of said saw-tooth wave signal which corresponds to the bottom corners of the raster display;
a first multiplier (4) which multiplies an output signal of said first differential comparator circuit (2) by itself to make a square thereof; and
a first amplitude adjusting circuit (6) which adjusts an amplitude of an output signal of said first multiplier, in accordance with a first control data signal applied to said first amplitude adjusting circuit;
said second unit comprising:
a second differential comparator circuit (3) which is supplied with a saw-tooth wave voltage signal having said vertical scanning frequency for sampling a lower portion of said saw-tooth wave signal which corresponds to the top corners of the raster display;
a second multiplier (5) which multiplies an output signal of said second differential comparator circuit by itself to make a square thereof; and
a second amplitude adjusting circuit (8) which adjusts an amplitude of an output signal of said second multiplier, in accordance with a second control data signal applied to said second amplitude adjusting circuit;
an adder circuit (10) which performs an addition of said amplitude-adjusted output signals of said first amplitude adjusting circuit and said second amplitude adjusting circuit, to thereby produce a sum signal thereof;
**characterized by**
a voltage/current converter (11) which is supplied with said saw-tooth wave voltage signal for converting said saw-tooth wave voltage signal into a current signal in accordance with a control data signal for varying a distribution ratio to be outputted from said voltage/current converter;
a third multiplier circuit (13) which receives said voltage/current converted current signal of said voltage/current converter and squares said current signal to produce an east/west-pincushion distortion-correction quadratic curve signal in accordance with a control data signal given thereto for adjusting an amplitude of a signal to be produced in said third multiplier circuit; and
an amplifier circuit (15) which receives said east/west-pincushion distortion-correction quadratic curve signal produced by said third multiplier circuit and said corner distortion correction signal supplied by said adder circuit to thereby produce a pincushion distortion-correction quadratic curve signal modified by said corner distortion correction signal.

2. A cathode ray tube display device for a television receiver or a video minitor for a computer output which comprises said corner pincushion correction circuit as claimed in claim 1.

## Patentansprüche

1. Eine Ecken-Kissenverzeichnungskorrekturvorrichtung zum Korrigieren einer Kissenverzeichnungsabweichung in den oberen Ecken und unteren Ecken eines Rasterbildes, die umfaßt:
ein Paar an Einheitenschaltungen, die eine erste Einheit und eine zweite Einheit beinhalten:
wobei die erste Einheit umfaßt:
eine erste Differential-Komperatorschaltung (2), welche mit einem Sägezahnwellensignal versorgt wird, die eine vertikale Abtastfrequenz zum Abtasten des oberen Anteiles des Sägezahnwellensignales hat, welcher dem unteren Ecken des Rasterbildes entspricht;
einen ersten Multiplikator (4), welcher ein Ausgangssignal der ersten Differentialkomperatorschaltung (2) mit sich selbst multipliziert, um ein Quadrat daraus zu bilden; und
eine erste Amplitudenanpassungsschaltung (6), welche eine Amplitude an ein Ausgangssignal des ersten Multiplikators entsprechend einem ersten Steuerungsdatensignal, das auf die erste Amplitudenanpassungsschaltung angewendet wird, anpaßt;
wobei die zweite Einheit umfaßt:
eine zweite Differentialkomperatorschaltung (3), welche mit einem Sägezahnwellenspannungssignal versorgt wird, die die vertikale Abtastfrequenz zum Abtasten eines unteren Anteiles des Sägezahnwellensignales hat, welches dem oberen Ecken des Rasterbildes entspricht;
ein zweiter Multiplikator (5), welcher ein Ausgangssignal der zweiten Differenzialkomperatorschaltung mit sich selbst multipliziert, um ein Quadrat daraus zu bilden; und
eine zweite Amplitudenanpassungsschaltung (8), welche eine Amplitude eines Ausgangssignales des zweiten Multiplikators entsprechend einem zweiten Steuerdatensi-gnal, welches auf die zweite Amplitudenanpassungsschaltung angewendet wird, anpaßt;
eine Addiererschaltung (10), welche eine Addition der amplitudenangepaßten Ausgangssignale der ersten Amplitudenanpassungsschaltung und der zweiten Amplitudenanpassungsschaltung ausführt, um dadurch ein Summensignal davon zu bilden;
**gekennzeichnet durch**
einen Spannungs-/Stromwandler (11), welcher mit dem Sägezahnwellenspannungssignal versorgt wird, um des Säge-zahnwellenspannungssignales in ein Stromsignal entsprechend einem Steuerungsdatensignal zum Variieren eines Verteilungsverhältnisses umzuwandeln, das von dem Spannungs-/Stromwandler ausgegeben wird;
eine dritte Multiplikatorschaltung (13), welche das spannungs-/stromumgewandelte Stromsignal des Spannungs-/Stromwandlers empfängt und das Stromsignal quadriert, um ein quadratisches Ost/West-Kissenverzeichnungs-Kur-vensignal mit Abweichungskorrektur entsprechend einem Steuerungsdatensignal herzustellen, das im aufgegeben wird, um eine Amplitude eines Signales anzupassen, das in der dritten Multiplikatorschaltung gebildet wird; und
eine Verstärkerschaltung (15), welche das quadratische Kurvensignal mit Ost/West-Kissenverzeichnung-Abwei-chungskorrektur, welches durch die dritte Multiplikatorschaltung gebildet wird, und das Eckenab-weichungskorrektursignal empfängt, welches durch die Addiererschaltung gebildet wird, um dadurch ein quadratisches Kurvensignal mit Kissenverzeichnungs-Abweichungskorrektur zu bilden, das durch das Eckenabweichungskorrektursignal modifiziert ist.

2. Eine Kathodenstrahlröhren-Anzeigeeinrichtung für ein Fernsehgerät oder einen Video-Bildschirm für einen Computerausgang, welche die Ecken-Kissenverzeich-nungskorrekturschaltung nach Anspruch 1 umfaßt.

## Revendications

1. Appareil de correction de la distorsion en coussin des coins destiné à corriger une distorsion en coussin dans les coins supérieurs et les coins inférieurs de l'affichage de trame de balayage comprenant :
une paire de circuits d'unités comprenant une première unité et une seconde unité :
ladite première unité comprenant :
un premier circuit comparateur différentiel (2) qui est alimenté avec un signal à tension d'onde en dents de scie présentant une fréquence de balayage vertical destinée à échantillonner une partie supérieure dudit signal d'onde en dents de scie qui correspond aux coins inférieurs de l'affichage de la trame de balayage,
un premier multiplicateur (4) qui multiplie un signal de sortie dudit premier circuit comparateur différentiel (2) par lui-même pour obtenir un carré de celui-ci, et
un premier circuit d'ajustement d'amplitude (6) qui ajuste une amplitude d'un signal de sortie dudit premier multiplicateur, conformément à un premier signal de données de commande appliqué audit premier circuit d'ajustement d'amplitude,
ladite seconde unité comprenant :
un second circuit comparateur différentiel (3) qui est alimenté par un signal à tension d'onde en dents de scie présentant ladite fréquence de balayage vertical afin d'échantillonner une partie inférieure dudit signal d'onde en dents de scie qui correspond aux coins supérieurs de l'affichage de trame de balayage,
un second multiplicateur (5) qui multiplie un signal de sortie dudit second circuit comparateur différentiel par lui-même pour obtenir un carré de celui-ci, et
un second circuit d'ajustement d'amplitude (8) qui ajuste une amplitude d'un signal de sortie dudit second multiplicateur, conformément à un second signal de données de commande appliqué audit second circuit d'ajustement d'amplitude,
un circuit additionneur (10) qui effectue une addition desdits signaux de sortie ajustés en amplitude dudit premier circuit d'ajustement d'amplitude et dudit second circuit d'ajustement d'amplitude, afin de produire ainsi un signal de somme de ceux-ci,
caractérisé par
un convertisseur tension/courant (11) qui est alimenté par ledit signal de tension d'onde en dents de scie destiné à convertir ledit signal de tension d'onde en dents de scie en un signal de courant conforme à un signal de données de commande destiné à faire varier un taux de conversion pour le signal qui doit être sorti à partir dudit convertisseur tension/courant,
un troisième circuit multiplicateur (13) qui reçoit ledit signal de courant converti de tension en courant dudit convertisseur tension/courant et élève au carré ledit signal de courant afin de produire un signal à courbe quadratique de correction de la distorsion en coussin est/ouest conformément au signal de données de commande qui lui est fourni afin d'ajuster une amplitude d'un signal à produire dans ledit troisième circuit multiplicateur, et
un circuit amplificateur (15) qui reçoit ledit signal à courbe quadratique de correction de la distorsion en coussin est/ouest produit par ledit troisième circuit multiplicateur et ledit signal de correction de la distorsion de coin fourni par ledit circuit additionneur afin de produire ainsi un signal à courbe quadratique de correction de la distorsion en coussin modifié par ledit signal de correction de la distorsion de coin.

2. Dispositif d'affichage à tube à rayon cathodique destiné à un récepteur de télévision ou à un moniteur vidéo destiné à une sortie d'ordinateur, qui comprend ledit circuit de correction de la distorsion en coussin selon la revendication 1.
